# EUROPÄISCHE PATENTSCHRIFT

(11) **EP 1 644 652 B1**
(45) Veröffentlichungstag und Bekanntmachung des Hinweises auf die Patenterteilung: **06.04.2011**
(21) Anmeldenummer: 04740990.9
(22) Anmeldetag: 14.07.2004
(51) Int. Cl.: F16H 3/093

(54) **Doppelkupplungsgetriebe**
double clutch transmission
transmission à embrayage double

(30) Priorität: 16.07.2003 DE 10332210
(43) Veröffentlichungstag der Anmeldung: 12.04.2006
(73) Patentinhaber: Daimler AG, 70327 Stuttgart (DE)
(72) Erfinder: GITT, Carsten, 70327 Stuttgart (DE)
(74) Vertreter: JENSEN & SON
(86) Internationale Anmeldenummer: PCT/EP2004/007773
(87) Internationale Veröffentlichungsnummer: WO 2005/008098

(56) Entgegenhaltungen:
- WO-A-01/65144
- DE-A- 3 907 154
- DE-A- 4 123 493
- DE-A- 4 422 900
- DE-A- 19 829 925
- US-A- 5 921 137
- US-A- 6 021 684

## Beschreibung

Die Erfindung betrifft ein Doppelkupplungsgetriebe gemäß dem Oberbegriff von Patenanspruch 1. Aus der WO 01/65144 ist ein Doppelkupplungsgetriebe mit den Merkmalen des Oberbegriffes des Anspruchs 1 bekannt.

Aus der DE 41 23 493 A1 ist bereits ein Doppelkupplungsgetriebe bekannt, bei dem eine Getriebeeingangswelle und eine Getriebeausgangswelle koaxial zueinander bzw. zu einer Zentralachse angeordnet sind. Die beiden Kupplungen der Doppelkupplung sind jeweils mit einer Zwischenwelle drehfest verbunden. Von den beiden Zwischenwellen kann über jeweils eine parallel zur Zentralachse angeordnete Vorgelegewelle auf die Getriebeausgangswelle abgetrieben werden. Diese Getriebeausgangswelle ist einerseits in einem Getriebegehäuse und andererseits gegenüber einer Zwischenwelle festgelagert.

Aus der EP 0 987 467 A2 ist ebenfalls bereits ein Doppelkupplungsgetriebe bekannt, bei dem eine Getriebeeingangswelle und eine Getriebeausgangswelle koaxial zueinander bzw. zu einer Zentralachse angeordnet sind. Die beiden Kupplungen der Doppelkupplung sind jeweils mit einer Zwischenwelle drehfest verbunden. Diese beiden Zwischenwellen tragen die Antriebszahnräder sämtlicher Gänge mit Ausnahme einer Abtriebskonstanten am Getriebeausgang. Die eine Zwischenwelle ist als Hohlwelle ausgeführt und an deren getriebeinnerem Ende mittels einer Zwischenwand radial gelagert bzw. abgestützt. Ferner zeigt die DE 198 21 164 A1 in Fig. 2 die Lagerung eines Doppelkupplungsgetriebe für einen Front-quer-Antriebsstrang.

Die gattungsgemäße US 6021684 beschreibt ein Doppelkupplungsgetriebe, bei welchem zwei koaxial zu einer Getriebeausgangswelle angeordnete Zwischenwellen jeweils mit einer der beiden Kupplungen verbunden sind, wobei die Getriebeausgangswelle mittels einer Wälzlagerung in X-Anordndung gelagert ist, wobei die Wälzlagerung zwei Kegelrollenlager umfasst, wobei die eine Zwischenwelle innerhalb der anderen als Hohlwelle ausgeführten Zwischenwelle angeordnet ist, wobei die Wälzlagerung ein drittes Wälzlager und ein viertes Wälzlager umfasst, wobei die Wälzlagerung angestellt ist, wobei das dritte Wälzlager und das vierte Wälzlager in X-Anordnung zum Wälzlager stehen, das die Getriebeausgangswelle im Getriebegehäuse lagert

Aufgabe der Erfindung ist es, ein Doppelkupplungsgetriebe mit koaxialer Eingangswelle und Ausgangswelle zu schaffen, welches bei einem kostengünstigen und kompakten Aufbau hohe Drehmomente übertragen kann.

Diese Aufgabe wird erfindungsgemäß mit den Merkmalen nach Patentanspruch 1 gelöst.

Ein Vorteil der Erfindung ist der, dass durch die Wälzlagerung in X-Anordnung trotz hoher übertragbarer Drehmomente ein einfacher Aufbau der Lagerung ermöglicht wird.

Die Wälzlager können in besonders vorteilhafter Weise als kostengünstige Kegelrollenlager ausgestaltet sein.

In besonders vorteilhafter Weise kann jeder der beiden Zwischenwellen genau eine Konstanten zugeordnet sein. Als die beiden Konstanten werden dabei die beiden Zahnradpaarungen bezeichnet, über die der Kraftfluss sämtlicher Gänge mit Ausnahme des direkten Ganges fließt. Die radial äußere Zwischenwelle - d.h. die Hohlwelle - kann in besonders vorteilhafter Weise radial an einer Kupplungsglockentrennwand abgestützt sein. Wenn die Zwischenwellen entsprechend kurz sind, kann in besonders vorteilhafte Weise auf eine zusätzliche Zwischenwand zur radialen Lagerung bzw. Abstützung der vorstehenden radial inneren Zwischenwelle verzichtet werden. Damit ergeben sich entsprechende Vorteile hinsichtlich der Kosten, des Montageaufwandes und der axialen Baulänge.

Es ist ein drittes Wälzlager vorgesehen, welches die eine Zwischenwelle innerhalb der anderen Zwischenwelle lagert und welches in X-Anordnung zum Wälzlager steht, dass die Getriebeausgangswelle im Getriebegehäuse lagert.

Ferner ist ein viertes Wälzlager vorgesehen, welches eine der beiden Zwischenwellen gegenüber der besagten Kupplungsglockeninnenwand abstützt. Dieses vierte Wälzlager kann in besonders vorteilhafter Weise in X-Anordnung zu dem Wälzlager stehen, welches die Getriebeausgangswelle im Getriebegehäuse lagert.

In besonders vorteilhafter Weise können zumindest zwei der besagten vier Wälzlager identische Lager sein, so dass sich infolge der hohen Stückzahl Kostenvorteile ergeben. Ferner ergeben sich Montagevorteile, da bei identischen Wälzlagern keine Verwechslungsgefahr besteht. Diese Wälzlager können in besonders vorteilhafter Weise als Kegelrollenlager oder aber als Schrägkugellager ausgestaltet sein.

In einer besonders vorteilhaften Ausgestaltung der Erfindung ist:
- die eine als Hohlwelle ausgeführte Zwischenwelle gegenüber dem Getriebegehäuse mittels eines Kegelrollenlagers gelagert,
- die radial innere Zwischenwelle gegenüber der als Hohlwelle ausgeführten Zwischenwelle mittels eines Kegelrollenlagers gelagert,
- die Getriebeausgangswelle gegenüber der radial inneren Zwischenwelle mittels eines Kegelrollenlagers gelagert und
- eine zusätzliches Nadellager oder Zylinderrollenlager zwischen den beiden koaxialen Zwischenwellen vorgesehen.

Die Verwendung einer Trockenkupplung hat gegenüber einer nassen Lamellenkupplung den Vorteil, dass der Wirkungsgrad wesentlich höher ist. Insbesondere bei Nutzfahrzeugen bietet sich die Verwendung einer trockenen Doppelkupplung an.

Besonders vorteilhaft ist die Ausgestaltung gemäß Patentanspruch 8 . Dabei stehen drei Wälzlager in X-Anordnung zu einem Wälzlager, welches die Getriebeausgangswelle an deren hinterem Ende im Getriebegehäuse lagert. Die drei erstgenannten Wälzlager können dabei zumindest teilweise innerhalb von Zahnrädern angeordnet sein, so dass infolge einer "Verschachtelung" eine axial kurze Bauweise ermöglicht wird. Diese axial kurze Bauweise ermöglicht die nahezu direkte Abstützung der Auflagerreaktionen der drei Wälzlager an einer Kupplungsglockentrennwand. Eine zusätzliche Trennwand zur Abstützung der Auflagerreaktionen im Doppelkupplungsgetrieberadsatz ist somit nicht notwendig, womit entsprechende Kosten-, Gewichts- und Bauraumvorteile einhergehen. Die besagten Zahnräder können insbesondere den Getriebekonstanten zugehörig sein.

Die Ausgestaltung gemäß Patentanspruch 9 ermöglicht die bauraumoptimale Anordnung der drei Wälzlager, wobei der Durchmesser der Wälzlager vom Getriebeausgang in die axial auf die Doppelkupplung weisende Richtung zunimmt. Das antreibende Zahnrad einer zweiten Getriebekonstanten ist dabei in vorteilhafter Weise
- an einer Hohlwelle festgelegt oder festlegbar und
- größer als ein antreibendes Zahnrad einer ersten Getriebekonstanten ausgeführt.

Das Zahnrad der ersten Getriebekonstanten ist dabei an einer innerhalb der Hohlwelle angeordneten Zwischenwelle festgelegt oder festlegbar. Durch diese Anordnung der Durchmesser ist es möglich, das innerhalb der zweiten Getriebekonstanten angeordnete Wälzlager größer, als das innerhalb der ersten Getriebekonstanten angeordnete Wälzlager, auszuführen. Ein weiteres Wälzlager kann die Hohlwelle beispielsweise an einer Kupplungsglockentrennwand abstützten. Letzteres Wälzlager ist demzufolge größer, als die beiden vorgenannten Wälzlager. Die: drei in diesem Absatz besagten Wälzlager sind somit vom Durchmesser her umso größer, umso stärker bzw. umso länger diese belastet werden. D.h., die Lagerdimensionierung dieser drei Wälzlager korrespondiert mit der Höhe bzw. Dauer der Lagerbelastung.

Besonders vorteilhaft ist die Anwendung der Erfindung in einem Antriebsstrang mit front-längs-eingebautem Antriebsmotor und Getriebe. Der Abtrieb kann dabei über eine Hinterachse oder als Mehrachsantrieb erfolgen. Prinzipiell ist auch der Abtrieb alleinig über die Vorderachse möglich.

Weitere Vorteile der Erfindung gehen aus den weiteren Patentansprüchen, der Beschreibung und der Zeichnung vor.

Die Erfindung ist nachfolgend anhand einer Zeichnung in einem Ausführungsbeispiel erläutert.

Es zeigen
Fig. 1 ein Doppelkupplungsgetriebe mit koaxialen Vorgelegewellen, bei welchem die Zentralwellen in X-Anordnung wälzgelagert sind und
Fig. 2 die Wälzlagerung aus Fig. 1 in einem Detail.

Dabei wird als Richtung "vorne" die vom Fahrzeugheck bzw. vom Getriebeausgang zum Antriebsmotor bzw. zur Doppelkupplung weisende Richtung gezeichnet. Dies entspricht in der Zeichnungsebene der Richtung "links". Die entsprechend entgegengesetzte Richtung wird im folgenden als nach "hinten" weisend bezeichnet.

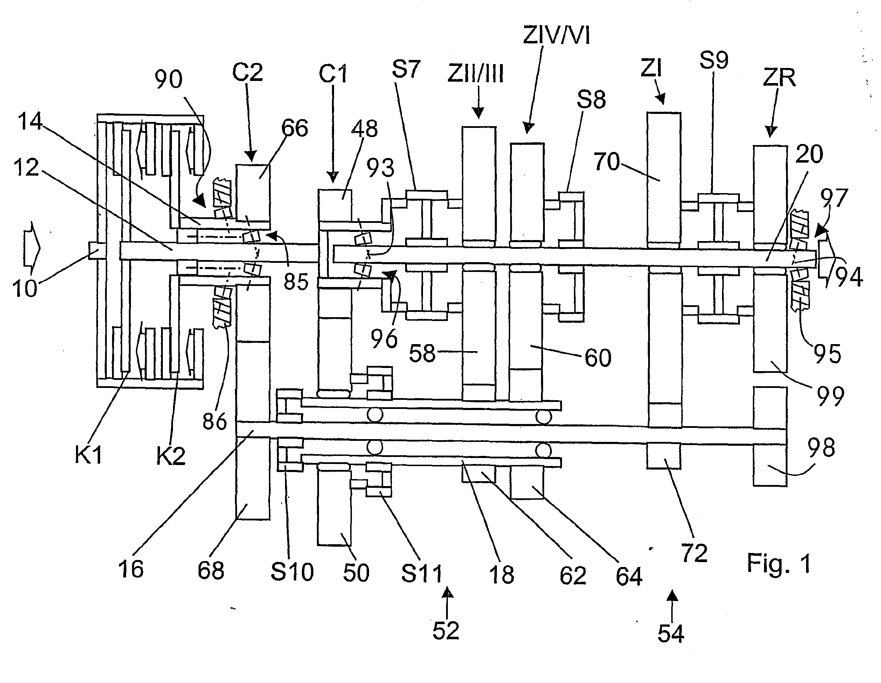

Fig. 1 zeigt in einem ersten Ausführungsbeispiel ein erfindungsgemäßes Doppelkupplungsgetriebe, welches Anwendung in einem Heckantrieb oder Mehrachsantrieb eines Kraftfahrzeuges findet, dessen Antriebsmotor und Doppelkupplungsgetriebe in Fahrtrichtung längs eingebaut sind. Dabei kann es sich insbesondere um einen drehmomentstarken Personenkraftwagen oder ein Nutzfahrzeug handeln.

Bei dem Doppelkupplungsgetriebe ist eine Eingangswelle 10 mit einer Getriebeausgangswelle 20 durch ein erstes Teilgetriebe 52 und ein zweites Teilgetriebe 54 verbunden. Die beiden Teilgetriebe 52 und 54 sind im Kraftfluß parallel zueinander angeordnet. Die Teilgetriebe 52, 54 besitzen je eine reibschlüssige Lastschaltkupplung K1, K2 und je eine Zwischenwelle 12, 14, von denen die eine Zwischenwelle 14 als radial äußere Hohlwelle und die andere Zwischenwelle 12 als radial innere Zwischenwelle ausgebildet ist. Die Zwischenwellen 12, 14 sind
- zueinander konzentrisch,
- zur Eingangswelle 10 koaxial und
- zur Getriebeausgangswelle 20 koaxial
angeordnet und können jeweils über die Lastschaltkupplung K1, K2 mit der Eingangswelle 10 wirkungsmäßig verbunden werden.

Die erste Zwischenwelle 12 des ersten Teilgetriebes 52 ist einerseits mit der Getriebeausgangswelle 20 durch eine ein- und ausrückbare Zahnradkupplung S7 zur Bildung eines direkten fünften Getriebegangs V und andererseits durch die Zahnradkupplung S11 über eine erste Getriebekonstante C1 mit einer zur Getriebeausgangswelle 20 parallelen, als Hohlwelle ausgeführten Vorgelegewelle 18 wirkungsmäßig verbindbar.

Die Vorgelegewelle 18 des ersten Teilgetriebes 52 ist durch ein Zahnradpaar ZIV/VI zur Bildung des höchsten und des zweithöchsten Getriebegangs IV, VI mit der Getriebeausgangswelle 20 verbunden.

Die zweite als Hohlwelle ausgebildete Zwischenwelle 14 des zweiten Teilgetriebes 52 ist über eine zweite Getriebekonstante C2 mit der Vorgelegewelle 16 verbunden, die die Vorgelegewelle 18 des ersten Teilgetriebes 52 mit Spiel durchsetzt. Die zweite Getriebekonstante C2 besitzt ein mit der Vorgelegewelle 16 konzentrisch und drehfest verbundenes Festrad 68. Die dem zweiten Teilgetriebe 54 angehörige Vorgelegewelle 16 ist über ein Zahnradpaar ZR für zwei Rückwärtsgetriebegänge R mit der Getriebeausgangswelle 20 verbunden. Ein Rückwärtsgetriebegang kann beispielsweise für einen Winterbetrieb und ein Rückwärtsgang kann beispielsweise für einen Sommerbetrieb ausgelegt werden.

Das Zahnradpaar ZR für die Rückwärtsgetriebegänge R besitzt ein auf der Getriebeausgangswelle 20 konzentrisch und drehbar angeordnetes Losrad 99, das durch die ein- und ausrückbare Zahnradkupplung S9 mit der Getriebeausgangswelle 20 kuppelbar ist, und ein Festrad 98, das konzentrisch und drehfest mit der Vorgelegewelle 16 verbunden ist. Zwischen dem Losrad 99 und dem Festrad 98 des Zahnradpaars ZR ist ein nicht näher dargestelltes Zahnrad zur Drehsinnumkehr angeordnet.

Eine Zahnradkupplung S10 ist auf der den Lastschaltkupplungen K1, K2 zugewandten Seite der zweiten Vorgelegewelle 18 angeordnet. Die Zwischenwelle 12 kann über die erste Getriebekonstante C1 vorteilhaft durch diese ein- und ausrückbare Zahnradkupplung S10 mit der Vorgelegewelle 16 und über die dem zweiten Teilgetriebe 54 zugeordneten Zahnradpaare mit der Getriebeausgangswelle 20 wirkungsmäßig verbunden werden. Mit jeder Getriebekonstanten kann jeweils über jedes Zahnradpaar auf die Getriebeausgangswelle 20 abgetrieben werden. Die Getriebekonstanten C1, C2 sind verschieden, so daß jedes Zahnradpaar zwei Getriebegängen zugeordnet ist.

Mit den zwei Getriebekonstanten C1, C2 können sechs verschiedene Vorwärtsgetriebegänge I, II, III, IV, V, VI erreicht werden. Entsprechend dem sequentiellen Hochschalten vom ersten bis zum sechsten Getriebegang I-VI kann sequentiell vom sechsten bis zum ersten Getriebegang VI-I unter Last zurückgeschaltet werden.

Die Vorgelegewelle 18 des ersten Teilgetriebes 52 ist durch ein Zahnradpaar ZII/III und ein Zahnradpaar ZIV/VI mit der Getriebeausgangswelle 20 verbunden. Die Zahnradpaare ZII/III, ZIV/VI besitzen jeweils ein auf der Getriebeausgangswelle 20 konzentrisch und drehbar gelagertes Losrad 58, 60, die mit auf der Vorgelegewelle 18 angeordneten Festrädern 62, 64 kämmen. Das Losrad 58 ist durch die Zahnradkupplung S7 und das Losrad 60 ist durch eine Zahnradkupplung S8 mit der Getriebeausgangswelle 20 kuppelbar.

Die dem zweiten Teilgetriebe 54 zugehörige Vorgelegewelle 16 ist über das Zahnradpaar ZI und über ein Zahnradpaar ZR mit der Getriebeausgangswelle 20 verbunden.

Das Zahnradpaar ZI für den ersten Getriebegang I besitzt ein auf der Getriebeausgangswelle 20 konzentrisch und drehbar angeordnetes Losrad 70, das mit einer Zahnradkupplung S9 mit der Getriebeausgangswelle 20 kuppelbar ist, und ein auf der Vorgelegewelle 16 konzentrisch und drehfest angeordnetes Festrad 72.

Die Zwischenwelle 14 des zweiten Teilgetriebes 54 kann über die zweite Getriebekonstante C2 durch eine ein- und ausrückbare Zahnradkupplung S10 mit der Vorgelegewelle 18 des ersten Teilgetriebes 52 und über die dem ersten Teilgetriebe 52 zugeordneten Zahnradpaare ZII/III, ZIV/VI mit der Getriebeausgangswelle 20 wirkungsmäßig verbunden werden. Die Zwischenwelle 12 kann über die erste Getriebekonstante C1 vorteilhaft durch die ein- und ausrückbare Zahnradkupplung S10 mit der Vorgelegewelle 16 und über die dem zweiten Teilgetriebe 54 zugeordneten Zahnradpaare ZI, ZR mit der Getriebeausgangswelle 20 wirkungsmäßig verbunden werden. Mit jeder Getriebekonstanten C1 und C2 kann jeweils über jedes Zahnradpaar ZI, ZIV/VI, ZII/III und ZR auf die Getriebeausgangswelle 20 abgetrieben werden. Die Getriebekonstanten C1 und C2 sind verschieden, so daß die Zahnradpaare ZII/III, ZIV/VI jeweils zwei Getriebegängen II, III und IV, VI zugeordnet sind. Dem Zahnradpaar ZI ist nur der erste Getriebegang I zugeordnet, wodurch dieser vorteilhaft unabhängig von einem anderen Getriebegang gewählt und gezielt auf einen bestimmten Anwendungsbereich des Doppelkupplungsgetriebes abgestimmt werden kann.

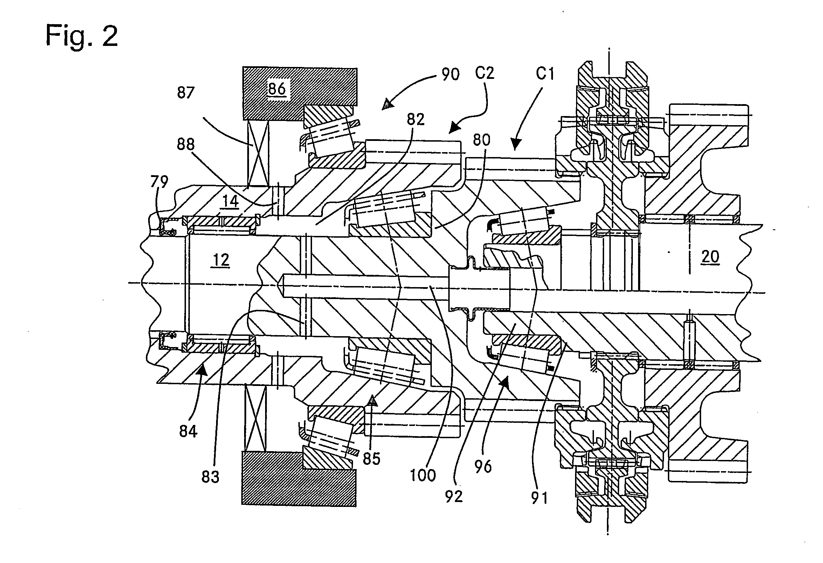

Die Getriebeausgangswelle 20 ist an deren beiden Enden mittels leicht angestellten Kegelrollenlagern 96, 97 in X-Anordnung gelagert. Dazu ist das hintere Ende der Getriebeausgangswelle 20 mittels des hinteren Kegelrollenlagers 97 in einem Getriebegehäuse 95 drehbar aufgenommen. Der Abstützkegel 94 dieses hinteren ersten Kegelrollenlagers 97 weist auf die beiden Kupplungen K1, K2. Der Abstützkegel 93 des vorderen zweiten Kegelrollenlagers 96 weist hingegen von den beiden Kupplungen K1, K2 weg, wobei unter anderem dieses zweite Kegelrollenlager 96 in der detaillierten Fig. 2 näher ersichtlich ist.

Das vordere zweite Kegelrollenlager 96 umfasst neben den Kegelrollen einen Lagerinnenring, der auf einem vordersten Zapfen 92 der Getriebeausgangswelle 20 aufgenommen ist und sich in der nach hinten weisende Richtung an einem Absatz 91 abstützt. Die Kegelrollen rollen radial außen an einer Innenkonusfläche eines Festrades der ersten Getriebekonstanten C1 ab. Damit hat das Festrad der Getriebekonstanten C1 die Form eines topfförmigen innenkonischen Zahnkranzes, dessen Topfrand am hinteren Ende liegt und dessen Topfboden am vorderen Ende liegt und sich radial nach innen erstreckt und über einen Absatz 80 in die Zwischenwelle 12 übergeht. Auf einer bearbeiteten Fläche der Zwischenwelle 14 ist ein Lagerinnenring eines dritten Kegelrollenlagers 85 aufgesetzt, der sich am besagten Absatz 80 abstützt. Dieses dritte Kegelrollenlager 85 weist gegenüber dem am Getriebeausgang angeordneten ersten Kegelrollenlager 97 ebenfalls eine X-Anordnung auf. D.h., der Abstützkegel weist nach hinten. Die Kegelrollen dieses dritten Kegelrollenlagers 85 rollen radial außen an einer Innenkonusfläche des Festrades der zweiten Getriebekonstante C2 ab. Damit hat das Festrad der zweiten Getriebekonstante C2 ebenfalls die Form eines topfförmigen innenkonischen Zahnkranzes, dessen Topfrand am hinteren Ende liegt und dessen Topfboden am vorderen Ende liegt. Dieser Topfboden geht jedoch in die als Hohlwelle ausgeführte Zwischenwelle 14 über.

Auf einem Lagerbereich vor dem Festrad der zweiten Getriebekonstanten C2 ist ein viertes Kegelrollenlager 90 angeordnet, welches ebenso wie das zweite und das dritte Kegelrollenlager in X-Anordnung zum ersten Kegelrollenlager 97 steht. Der Lagerinnenring dieses vierte Kegelrollenlager 90 ist axial am Zahnkranz des Festrades der zweiten Getriebekonstanten C2 abgestützt. Der Lageraußenring dieses vierten Kegelrollenlagers 90 stützt sich in der nach vorne weisenden Richtung axial an einem Lagerauge einer Kupplungsglockentrennwand 86 des Getriebegehäuses 95 ab, in das der Lageraußenring eingesetzt ist. Damit verspannen das erste Kegelrollenlager 97 und das vierte Kegelrollenlager 90 die dazwischen liegenden beiden Kegelrollenlager 96 und 85 axial.

Axial vor den besagten vier Lagern ist ein Nadellager 84 radial zwischen den beiden Zwischenwellen 12, 14 angeordnet. Diese Nadellager 84 bildet mit dem dritten Kegelrollenlager 85 eine sichere Zwei-Punkt-Lagerung der Zwischenwelle 12 gegenüber der Zwischenwelle 14. Damit sind die beiden Wälzlager 84, 85 in einem ringförmigen Zwischenraum 82 zwischen den beiden Zwischenwellen 12, 14 angeordnet. In der nach vorne weisenden Richtung ist dieser Zwischenraum 82 mittels eines Radialwellendichtringes 79 abgedichtet, so dass ein Getriebeöl, welches die Zahneingriffe innerhalb des Doppelkupplungsgetriebes im Fahrbetrieb kühlt und schmiert, nicht in den Kupplungsraum der beiden Kupplungen K1, K2 gelingen kann. Der Kupplungsraum ist von den Festrädern und Losädern des Doppelkupplungsgetriebes mittels der besagten Kupplungsglockentrennwand 86 getrennt, so dass auch von dort kein Getriebeöl in den Kupplungraum eintreten kann. Dazu ist ein weiterer Radialwellendichtring 87 in die Kupplungsglockentrennwand 86 eingesetzt. Die beiden Kupplungen K1, K2 sind als Trockenkupplungen ausgeführt.

Zwischen dem Nadellager 84 und dem dritten Kegelrollenlager 85 weist die radial innere Zwischenwelle 12 eine Querbohrung 83 auf, die Getriebeöl von einer zentralen Schmiermittelbohrung 100 in den Zwischenraum 82 leitet. Von dort kühlt und schmiert ein erster Teilstrom des Getriebeöls das dritte Kegelrollenlager 85. Ein zweiter Teilstrom des Getriebeöls wird durch eine Querbohrung 88 der Zwischenwelle 14 zum vierten Kegelrollenlager 90 geleitet und schmiert und kühlt dieses. Die Fliehkraft infolge der rotierenden Zwischenwellen 12, 14 verteilt dabei das Getriebeöl radial nach außen.

Im folgenden werden die Lagerbelastungen der Wälzlager erläutert. Wenn die Getriebekonstante C1 sich im Drehmomentenfluß befindet, wird das zweite Kegelrollenlager 96 im Wesentlichen mit einer ersten Radialkraft beaufschlagt, die sich aus einem Teil der Radialkomponente der aktuell Kraft übertragenden Verzahnungspaarung zwischen der Vorgelegewelle 16 bzw. 18 und der Getriebeausgangswelle 20 ergibt. Ein weiterer Teil der Radialkomponente dieser Verzahnungspaarung wird natürlich am hinteren - in Fig. 1 dargestellten - ersten Kegelrollenlager 97 abgestützt. Das dritte Kegelrollenlager 85 wird hingegen mit einer zweiten Radialkraft beaufschlagt, die näherungsweise der Summe aus der zuvor beschriebenen ersten Radialkraft und der entsprechenden Radialkraftkomponente aus der im Drehmomentenfluß befindlichen Getriebekonstante C1 entspricht. Das Kegelrollenlager 90 ist in etwa mit derselben hohen zweiten Radialkraft, wie das zweite Kegelrollenlager 85, beaufschlagt. Dadurch, dass der Durchmesser des vierten Kegelrollenlagers 90 größer ist, als der Durchmesser des dritten Kegelrollenlagers 85, der wiederum größer ist, als der Durchmesser des zweiten Kegelrollenlagers 96, korrespondiert die Lagerdimensionierung dieser drei Kegelrollenlager 96, 85, 90 mit der Höhe bzw. Dauer der Lagerbelastung.

Analoges gilt für die Lagerbelastung, wenn die Getriebekonstante C2 sich im Drehmomentenfluß befindet. Das vierte Kegelrollenlager 90 trägt hier wiederum in etwa die Summe der Radialkraftkomponenten aus der Getriebekonstanten C2 und der vom Kegelrollenlager 85 bzw. 96 übertragenen Radialkraft. In diesem Fall sind das zweite und das dritte Kegelrollenlager 85 und 96 etwa mit der gleichen - geringeren - Radialkraft beaufschlagt.

In jeder der beiden Kupplungen der Doppelkupplung kann ein Torsionsdämpfer vorgesehen sein. Ebenso kann ein Zweimassenschwungrad zwischen dem Antriebsmotor und der Doppelkupplung vorgesehen sein.

Anstelle der Kegelrollenlager können auch andere Wälzlager Anwendung finden. Beispielsweise können Schrägkugellager oder aber schräge Zylinderrollenlager Anwendung finden.

Je nach Getriebeauslegung können die Wälzlager in X-Anordnung von geringfügig bis stark angestellt sein.

Anstelle der Dichtmanschette zwischen den Schmiermittelbohrungen der inneren Zwischenwelle und der Getriebeausgangswelle sind auch andere Dichtungen, wie beispielsweise O-Ringe, denkbar.

Anstelle der im ersten Ausführungsbeispiel Fig. 1 gezeigten koaxialen Vorgelegewellen können auch parallel versetzte Vorgelegewellen Anwendung finden.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Doppelkupplungsgetriebe, bei welchem zwei koaxial zu einer Getriebeausgangswelle (20) angeordnete Zwischenwellen (12, 14) jeweils mit einer der beiden Kupplungen (K1, K2) verbunden sind, wobei die Getriebeausgangswelle (20) mittels einer Wälzlagerung (97 und 96 bzw. 85 bzw. 90) in X-Anordndung gelagert ist, wobei die Wälzlagerung (97 und 96 bzw. 85 bzw. 90) ein erstes Wälzlager (97) und ein zweites Wälzlager (96) umfasst und wobei diese zwei Wälzlager zwei Kegelrollenlager (97 und 96 bzw. 85 bzw. 90) sind , wobei die eine Zwischenwelle (12) innerhalb der anderen als Hohlwelle ausgeführten Zwischenwelle (14) angeordnet ist, wobei die Wälzlagerung ein drittes Wälzlager (85) und
ein viertes Wälzlager (90) umfasst,
wobei die Wälzlagerung (97 und 96 bzw. 85 bzw. 90) angestellt ist, wobei das dritte Wälzlager (85) und das vierte Wälzlager (90) in X-Anordnung zum ersten Wälzlager (97) stehen, das die Getriebeausgangswelle (20) im Getriebegehäuse (95) lagert,
**dadurch gekennzeichnet,**
**dass** das zweite Wälzlager (96), welches die Getriebeausgangswelle (20) gegenüber der radial inneren Zwischenwelle (12) lagert, radial innerhalb und in einem axialen Überschneidungsbereich eines Zahnrades angeordnet ist, welches einer ersten Getriebekonstanten (C1) zugehörig sowie mit der inneren Zwischenwelle (12) verbunden ist.

2. Doppelkupplungsgetriebe nach Patentanspruch 1,
**dadurch gekennzeichnet,**
**dass** die als Hohlwelle ausgeführte Zwischenwelle (14) die innere Zwischenwelle (12) zusätzlich mittels eines axial benachbart zum dritten Wälzlager (85) angeordneten Loslagers (84) abstützt.

3. Doppelkupplungsgetriebe nach Patentanspruch 2,
**dadurch gekennzeichnet,**
**dass** einem Loslager (84) in einem Ringraum (Zwischenraum 82) zwischen den beiden Zwischenwellen (12, 14) angeordnet ist, welcher von einem Schmiermittelkanal (83) mit Schmiermittel (Getriebeöl) versorgt wird.

4. Doppelkupplungsgetriebe nach Patentanspruch 3,
**dadurch gekennzeichnet,**
**dass** die radial innere Zwischenwelle (12) einen zentrale Schmiermittelbohrung zur Versorgung des Loslagers 84) mit Schmiermittel aufweist.

5. Doppelkupplungsgetriebe nach Patentanspruch 4,
**dadurch gekennzeichnet,**
**dass** die besagte Schmiermittelbohrung mit einer weiteren Schmiermittelbohrung fluchtet, welche zentral innerhalb der Getriebeausgangswelle (20) angeordnet ist.

6. Doppelkupplungsgetriebe nach Patentanspruch 5,
**dadurch gekennzeichnet,**
**dass** die beiden Schmiermittelbohrungen im übergangsbereich mittels einer Dichtung gegeneinander abgedichtet sind.

7. Doppelkupplungsgetriebe nach einem der vorhergehenden Patentansprüche,
**dadurch gekennzeichnet,**
**dass** axial neben dem Loslager (84) ein Radialwellendichtring (79) angeordnet ist, so dass Schmiermittel gegenüber der Doppelkupplung abgedichtet ist, wobei letztere als Trockenkupplung ausgeführt ist.

8. Doppelkupplungsgetriebe nach einem der vorhergehenden Patentansprüche,
**dadurch gekennzeichnet,**
**dass** das dritte Wälzlager (85) radial innerhalb und in einem axialen Überschneidungsbereich eines Zahnrades angeordnet ist, welches einer zweiten Getriebekonstanten (C2) zugehörig sowie mit der als Hohlwelle ausgeführten Zwischenwelle (12) verbunden ist.

9. Doppelkupplungsgetriebe nach einem der vorhergehenden Patentansprüche,
**dadurch gekennzeichnet,**
**dass** die eine radial innere Zwischenwelle (12) an deren von der Doppelkupplung abgewandten Ende ein Zahnrad einer ersten Getriebekonstanten (C1) trägt, welches kleiner ist, als ein Zahnrad einer zweiten Getriebekonstanten (C2), welches an dem von der Doppelkupplung abgewandten Ende der als Hohlwelle ausgeführten Zwischenwelle (14) angeordnet ist.

## Claims

1. Twin-clutch gearbox, wherein each of two intermediate shafts (12, 14) arranged coaxial with a gearbox output shaft (20) is connected to one of the two clutches (K1, K2), wherein the gearbox output shaft (20) is bearing-mounted in an X-arrangement by means of an antifriction bearing arrangement (97 and 96 or 85 or 90 respectively), wherein the antifriction bearing arrangement (97 and 96 or 85 or 90 respectively) comprises a first antifriction bearing (97) and a second antifriction bearing (96) and wherein these two antifriction bearings are two tapered roller bearings (97 and 96 or 85 or 90 respectively), wherein one intermediate shaft (12) is located within the other intermediate shaft (14) designed as a hollow shaft, wherein the antifriction bearing arrangement comprises a third antifriction bearing (85) and a fourth antifriction bearing (90),
wherein the antifriction bearing arrangement (97 and 96 or 85 or 90 respectively) is pitched, wherein the third antifriction bearing (85) and the fourth antifriction bearing (90) are in an X-arrangement with respect to the first antifriction bearing (97) which supports the gearbox output shaft (20) in the gearbox housing (95),
**characterised in that**
the second antifriction bearing (96) which supports the gearbox output shaft (20) against the radially inner intermediate shaft (12) is located radially within and in an axial overlap region of a gear associated with a first transmission constant (C1) and connected to the inner intermediate shaft (12).

2. Twin-clutch gearbox according to patent claim 1,
**characterised in that**
the intermediate shaft (14) designed as a hollow shaft additionally supports the inner intermediate shaft (12) by means of a loose bearing (84) disposed axially adjacent to the third antifriction bearing (85).

3. Twin-clutch gearbox according to patent claim 2,
**characterised in that**
the loose bearing (84) is disposed in an annular space (clearance 82) between the two intermediate shafts (12, 14) which is supplied with lubricant (gear oil) via a lubricant passage (83).

4. Twin-clutch gearbox according to patent claim 3,
**characterised in that**
the radially inner intermediate shaft (12) is provided with a central lubricant hole for supplying the loose bearing (84) with lubricant.

5. Twin-clutch gearbox according to patent claim 4,
**characterised in that**
said lubricant hole is aligned to a further lubricant hole disposed centrally within the gearbox output shaft (20).

6. Twin-clutch gearbox according to patent claim 5,
**characterised in that**
the two lubricant holes are sealed against each other by means of a seal in the transitional region.

7. Twin-clutch gearbox according to any of the preceding claims,
**characterised in that**
a radial shaft seal (79) is provided axially adjacent to the loose bearing (84), so that lubricant is sealed against the twin-clutch, the latter being designed as a dry clutch.

8. Twin-clutch gearbox according to any of the preceding claims,
**characterised in that**
the third antifriction bearing (85) is disposed in an axial overlap region of a gear associated with a second transmission constant (C2) and connected to the intermediate shaft (12) designed as a hollow shaft.

9. Twin-clutch gearbox according to any of the preceding claims,
**characterised in that**
the radially inner intermediate shaft (12) supports at the end remote from the twin-clutch a gear of a first transmission constant (C1) which is smaller than a gear of a second transmission constant (C2) mounted at the end of the intermediate shaft (14) designed as a hollow shaft which is remote from the twin clutch.

## Revendications

1. Transmission à double embrayage dotée de deux arbres intermédiaires (12, 14) disposés coaxialement à un arbre de sortie de transmission (20), chacun reliés à l'un des deux embrayages (K1, K2), l'arbre de sortie de transmission (20) étant monté en X au moyen d'un montage sur palier à roulement (97, et 96 ou 85 ou 90), le montage sur palier à roulement ((97, et 96 ou 85 ou 90) comprend un premier palier à roulement (97) et un second palier à roulement (96) et ces deux paliers à roulement étant deux roulements à galets coniques (97 et 96 ou 85 ou 90), l'un des arbres intermédiaires (12) étant disposé à l'intérieur de l'autre arbre intermédiaire (14) réalisé comme un arbre creux, le montage sur palier à roulement comprend un troisième palier à roulement (85) et un quatrième palier à roulement (90), le montage sur palier à roulement (97 et 96 ou 85 ou 90) est réglé, le troisième palier à roulement (85) et le quatrième palier à roulement (90) étant disposés en X par rapport au premier palier à roulement (97) qui loge l'arbre de sortie de transmission (20) dans le carter de transmission (95), **caractérisé en ce que** le deuxième palier à roulement (96) lequel loge l'arbre de sortie de transmission (20) en regard de l'arbre intermédiaire (12) radialement intérieur, est disposé radialement à l'intérieur et dans une zone de chevauchement axiale d'une roue dentée laquelle est associée à une première constante de transmission (C1) et reliée à l'arbre intermédiaire (12) intérieur.

2. Transmission à double embrayage selon la revendication 1, **caractérisée en ce que** l'arbre intermédiaire (14) réalisé comme un arbre creux porte l'arbre intermédiaire (12) intérieur en plus au moyen d'un palier libre (84) disposé axialement à proximité du troisième palier à roulement (85).

3. Transmission à double embrayage selon la revendication 2, **caractérisée en ce qu'**un palier libre (84) est disposé dans un espace annulaire (chambre intermédiaire 82) entre les deux arbres intermédiaires (12, 14) lequel est alimenté en lubrifiant (huile d'engrenage) par un canal de lubrifiant (83).

4. Transmission à double embrayage selon la revendication 3, **caractérisée en ce que** l'arbre intermédiaire (12) radialement intérieur présente un orifice de lubrification pour alimenter le palier libre (84) en lubrifiant.

5. Transmission à double embrayage selon la revendication 4, **caractérisée en ce que** ledit orifice de lubrification est aligné avec un autre orifice de lubrification, lequel est disposé au centre de l'arbre de sortie de transmission (20).

6. Transmission à double embrayage selon la revendication 5, **caractérisée en ce qu'**un joint assure l'étanchéité des deux orifices de lubrification l'un par rapport à l'autre dans la zone de transfert.

7. Transmission à double embrayage selon l'une quelconque des revendications précédentes, **caractérisée en ce qu'**un joint radial d'arbre (79) est disposé axialement à proximité du palier libre (84) de sorte que le lubrifiant soit isolé par rapport au double embrayage, ce dernier étant conçu comme un embrayage à sec.

8. Transmission à double embrayage selon l'une quelconque des revendications précédentes, **caractérisée en ce que** le troisième palier de roulement (85) est disposé radialement à l'intérieur et dans une zone de chevauchement axiale d'une roue dentée, laquelle est associée à la deuxième constante de transmission (C2) et reliée à l'arbre intermédiaire (12) conçu comme un arbre creux.

9. Transmission à double embrayage selon l'une quelconque des revendications précédentes, **caractérisée en ce que** l'arbre intermédiaire (12) radialement intérieur porte sur son extrémité opposée au double embrayage une roue dentée d'une première constante de transmission (C1), laquelle est plus petite qu'une roue dentée d'une seconde constante de transmission (C2) laquelle est disposée sur l'extrémité opposée au double embrayage de l'arbre intermédiaire (14) conçu comme un arbre creux.
